# EUROPEAN PATENT SPECIFICATION

(11) **EP 2 816 566 B1**
(45) Date of publication and mention of the grant of the patent: **16.08.2017**
(21) Application number: 13743465.0
(22) Date of filing: 29.01.2013
(51) Int. Cl.: G21G 7/00, G21B 3/00

(54) **NUCLIDE CONVERSION METHOD AND NUCLIDE CONVERSION DEVICE**
NUKLIDUMWANDLUNGSVERFAHREN UND NUKLIDUMWANDLUNGSVORRICHTUNG
PROCÉDÉ DE CONVERSION DE NUCLÉIDES ET DISPOSITIF DE CONVERSION DE NUCLÉIDES

(30) Priority: 31.01.2012 JP 2012018759; 13.09.2012 JP 2012201196
(43) Date of publication of application: 24.12.2014
(73) Proprietor: Mitsubishi Heavy Industries, Ltd., Tokyo 108-8215 (JP)
(72) Inventor: IWAMURA, Yasuhiro, Tokyo 108-8215 (JP); ITOU, Takehiko, Tokyo 108-8215 (JP); MUTA, Kenji, Tokyo 108-8215 (JP); TSURUGA, Shigenori, Tokyo 108-8215 (JP)
(74) Representative: Intès, Didier Gérard André
(86) International application number: PCT/JP2013/051833
(87) International publication number: WO 2013/115155

(56) References cited:
- EP-A2- 1 202 290
- JP-A- 2002 202 392
- JP-A- 2010 066 114
- US-A- 5 085 825
- Celani et al.: "Unexpected detectionof new elements in electrolytic experiments with deuterated ethyl-alcohol, Pd wire, Sr and Hg salts", Proceedings of the 4th meeting of Japan CF Research Society - October 17-18, 2002 - Iwate University, Japan , 05, 2003, pages 17-21, XP002742630, Japan Retrieved from the Internet: URL:http://jcfrs.org/file/jcf4-05.pdf [retrieved on 2015-07-21]
- IWAMURA Y ET AL: "DETECTION OF ANOMALOUS ELEMENTS, X-RAY, AND EXCESS HEAT IN A D2-PD SYSTEM AND ITS INTERPRETATION BY THE ELECTRON-INDUCED NUCLEAR REACTION MODEL", FUSION TECHNOLOGY, AMERICAN NUCLEAR SOCIETY. LAGRANGE PARK, ILLINOIS, US, vol. 33, no. 4, 1 July 1998 (1998-07-01), pages 476-492, XP000779029, ISSN: 0748-1896

## Description

### {Technical Field}

The present invention relates to a nuclide transmutation method and a nuclide transmutation device which are applicable, for example, to radioactive waste treatment technologies, technologies for generating rare elements from elements found in abundance in the natural world, and energy generation technologies based on condensed matter nuclear reactions.

### {Background Art}

A nuclide transmutation device and a nuclide transmutation method which enable nuclide transmutation to be performed in a relatively small-scale device compared with large-scale devices such as accelerators and nuclear reactors are disclosed in Patent Literature 1 (PTL 1).

The nuclide transmutation device disclosed in PTL 1 comprises a structure, which contains a hydrogen-absorbing metal or hydrogen-absorbing alloy such as palladium (Pd) or a palladium alloy, and a substance (calcium oxide: CaO) laminated thereon which has a relatively low work function compared with the hydrogen-absorbing metal or alloy, an absorption chamber, the inside of which can be held in an airtight state, a desorption chamber which can be held in an airtight state against the structure, a deuterium supply means which supplies deuterium gas to the absorption chamber, and an evacuation means which can place the desorption chamber in a vacuum state.

In the nuclide transmutation device disclosed in PTL 1, the nuclide for which transmutation is required (the substance to undergo nuclide transmutation) is added to one surface of the structure using a technique such as vapor deposition, and deuterium (D₂) gas is passed through the structure from the surface to which the substance to undergo nuclide transmutation has been added, thereby inducing a nuclear reaction and transmuting the substance to undergo nuclide transmutation to a different nuclide.

In the nuclide transmutation device having the structure described above, by adding the substance to undergo nuclide transmutation to the surface of a structure in which a nano scale thin film of CaO or the like has been combined with Pd, a stable nuclear reaction can proceed, and an increase in the amount of transmutation can be promoted.

### {Citation List}

### {Patent Literature}

{PTL 1} the Publication of Japanese Patent No. 4,346,838

### {Summary of Invention}

### {Technical Problem}

The amount of nuclide transmutation in the nuclide transmutation device disclosed in PTL 1 is of the level of several ng/cm² to several tens of ng/cm², and in order to proceed to practical application of the device, a further increase in the amount of nuclide transmutation is desirable.

The present invention has been developed in light of these circumstances, and has an object of providing a nuclide transmutation device and a nuclide transmutation method which enable nuclide transmutation to be performed in a relatively small-scale device compared with large-scale devices such as accelerators and nuclear reactors, wherein the amount of nuclide transmutation can be increased.

### {Solution to Problem}

In order to achieve the above object, the nuclide transmutation device and the nuclide transmutation method of the present invention adopt the aspects described below.

A first aspect of the present invention provides a nuclide transmutation method comprising an electrolytic solution supply step of supplying an electrolytic solution containing heavy water to a high deuterium concentration unit which forms an enclosed space that can be sealed by a structure comprising palladium or a palladium alloy, or a hydrogen-absorbing metal other than palladium or a hydrogen-absorbing alloy other than a palladium alloy, a high concentration formation step of electrolyzing the supplied electrolytic solution to generate deuterium, and producing a state of high deuterium concentration near the high deuterium concentration unit side surface of the structure, a low concentration formation step of placing a low deuterium concentration unit, which forms an enclosed space that can be sealed by the structure and is provided on the opposite side of the structure from the high deuterium concentration unit, in a state having a low deuterium concentration relative to that of the high deuterium concentration unit, a gas discharge step of discharging gas from the high deuterium concentration unit, and a nuclide transmutation step in which, as the deuterium penetrates through the structure from the high deuterium concentration unit toward the low deuterium concentration unit, a substance to undergo nuclide transmutation undergoes nuclide transmutation in the structure by reaction with the deuterium.

In the high concentration formation step, in the high deuterium concentration unit, the electrolytic solution containing heavy water is electrolyzed using the structure as one electrode, thereby generating deuterium and producing a state of high deuterium concentration near the surface of the structure.

By providing the high concentration formation step and the low concentration formation step, a deuterium concentration gradient is generated between the high deuterium concentration unit and the low deuterium concentration unit, with the structure sandwiched therebetween. As a result of this deuterium concentration gradient, a flux of deuterium is formed inside the structure, flowing from the high deuterium concentration unit side toward the low deuterium concentration unit side. The deuterium generated by the electrolysis is absorbed by the structure and penetrates through the structure to the low deuterium concentration unit side. While the deuterium is penetrating through the structure, a nuclide transmutation reaction occurs between the deuterium and the substance to undergo nuclide transmutation, causing nuclide transmutation of the substance to undergo nuclide transmutation.

Conventionally, the addition of hydrogen or deuterium to the hydrogen-absorbing metal (the structure) has been achieved by using gas pressure. When gas pressure is used, the hydrogen adsorbs physically to the surface of the structure due to van der Waals forces (intermolecular forces), atomic dissociation (dissociative adsorption, chemical adsorption) occurs, and hydrogen atoms diffuse into the metal lattice by interstitial solid solution and the formation of hydrogen compounds. On the other hand, when deuterium is added to the hydrogen-absorbing metal (the structure) using electrolysis, the equivalent hydrogen pressure generated by the electrolysis (the hydrogen pressure packed inside the electrode, which corresponds with the hydrogen overvoltage and the electrolytic voltage) is significantly higher than that generated when gas pressure is used, and therefore the deuterium packing density can be increased.

According to the invention described above, by increasing the packing density of deuterium in the structure, the amount of nuclide transmutation of the substance to undergo nuclide transmutation can be increased.

By supplying the electrolytic solution containing deuterium to the high deuterium concentration unit side in the electrolytic solution supply step, the deuterium concentration in the high deuterium concentration unit can be maintained within a desired range. Accordingly, the high deuterium concentration unit side can be held in a state of high hydrogen partial pressure for a long period of time. Further, because the gas which does not penetrate through the structure is exhausted externally in the gas discharge step, the interior of the high deuterium concentration unit can be maintained within the desired pressure range.

In one aspect of the invention described above, the method also comprises an addition step, performed prior to the electrolytic solution supply step, in which the substance to undergo nuclide transmutation is added to the structure.

Alternatively, in one aspect of the invention described above, an electrolyte containing the substance to undergo nuclide transmutation is added to the electrolytic solution, and the electrolytic solution containing ions of the substance to undergo nuclide transmutation is supplied to the high deuterium concentration unit in the electrolyte concentration supply step, thereby adding ions of the substance to undergo nuclide transmutation to the structure.

By employing the configuration described above, the substance to undergo nuclide transmutation can be brought into contact with the structure at a high concentration level. When an electrolyte containing the substance to undergo nuclide transmutation is added to the electrolytic solution, because the substance to undergo nuclide transmutation can be added continuously to the structure, the nuclide transmutation step can be continued for a long period of time.

In particular, when the substance to undergo nuclide transmutation is not added to the structure, but rather an electrolyte containing the substance to undergo nuclide transmutation is added to the electrolytic solution, the step of adding the substance to undergo nuclide transmutation to the structure can be omitted, and this offers the advantage that the processing unit used for the addition becomes unnecessary.

In one aspect of the invention described above, the method preferably comprises a concentration adjustment step in which the temperature of the electrolytic solution containing ions of the substance to undergo nuclide transmutation prior to supply to the high deuterium concentration unit, and the amount of the electrolytic solution supplied to the high deuterium concentration unit are adjusted, thereby adjusting the concentration of ions of the substance to undergo nuclide transmutation within the electrolytic solution inside the high deuterium concentration unit.

The higher the concentration of ions of the substance to undergo nuclide transmutation incorporated within the electrolytic solution inside the high deuterium concentration unit (and particularly near the structure), the thinner the electric double layer at the structure surface becomes, and the more the electric field intensity in the electric double layer increases. The higher the electric field intensity, the greater the energy accelerating the ions of the substance to undergo nuclide transmutation, and therefore the larger the amount of the substance to undergo nuclide transmutation that can be added to the structure. Further, the higher the electric field intensity, the more the electrolysis of the heavy water at the structure (electrode) is accelerated. As a result, the amount of the nuclide transmutation reaction can be increased.

On the other hand, the amount of the heavy water electrolysis reaction is greater than the amount of the nuclide transmutation reaction. As a result, as the reactions continue, the concentration of the electrolyte containing the substance to undergo nuclide transmutation increases, and electrolyte salts tend to precipitate. If these electrolyte salts adhere to the electrode, then the reactions described above are inhibited, causing a deterioration in the amount of reaction.

The amount of the electrolyte containing the substance to undergo nuclide transmutation dissolved in the electrolytic solution is dependent on the temperature of the electrolytic solution. In other words, by increasing the temperature of the electrolytic solution, the amount of the electrolyte that can be dissolved increases, meaning the ion concentration in the electrolytic solution can be increased. By controlling the ion concentration in the supplied electrolytic solution and the supply volume, the ion concentration in the electrolytic solution inside the high deuterium concentration unit can be adjusted, thus enabling the amount of the nuclide transmutation reaction to be controlled.

Further, by adjusting the concentration of ions of the substance to undergo nuclide transmutation, the precipitation of electrolyte salts can be prevented.

In one aspect of the invention described above, the aforementioned low concentration formation step may include an evacuation step of evacuating the other surface side of the structure to a state of vacuum.

In one aspect of the invention described above, the low concentration formation step may include an inert environment formation step of supplying an inert gas to the other surface side of the structure to form an inert atmosphere.

According to the aspects of the present invention described above, in the low concentration formation step, the evacuation step or the inert environment formation step is used to place the low deuterium concentration unit in a state having a relatively low deuterium pressure. When the evacuation step is performed, the low deuterium concentration unit adopts a vacuum state. When the inert environment formation step is performed, the low deuterium concentration unit is filled with the inert gas, resulting in a hydrogen partial pressure that is effectively zero. As a result, the low deuterium concentration unit adopts a state with a relatively low hydrogen concentration compared with the high deuterium concentration unit, and a deuterium concentration difference can be formed in the structure.

In one aspect of the invention described above, the method preferably comprises a cooling step of cooling the supplied electrolytic solution so that the temperature of the electrolytic solution supplied to one surface side of the structure exhibits a prescribed temperature, and a heating step of heating the other surface side of the structure to a prescribed temperature, thereby forming a temperature gradient across the thickness direction of the structure.

By including the cooling step and the heating step, a temperature gradient can be formed in the thickness direction of the structure, so that the temperature on the high deuterium concentration unit side is the lowest, with the temperature increasing in the direction of the low deuterium concentration unit side. The hydrogen-absorbing metal or hydrogen-absorbing alloy that constitutes the structure, and particularly palladium, tends to exhibit better hydrogen absorption at lower temperatures. Accordingly, by forming a temperature gradient, the deuterium is able to exist more readily on the surface on the high deuterium concentration unit side of the structure. As a result, a deuterium concentration gradient can be formed in the thickness direction of the structure, enabling the amount of the nuclide transmutation reaction to be increased.

Furthermore, a second aspect of the present invention provides a nuclide transmutation device comprising a structure comprising palladium or a palladium alloy, or a hydrogen-absorbing metal other than palladium or a hydrogen-absorbing alloy other than a palladium alloy, a high deuterium concentration unit and a low deuterium concentration unit, which are disposed on either side of the structure so as to sandwich the structure therebetween, and form an enclosed space that can be sealed by the structure, a high concentration formation means which produces a state of high deuterium concentration near the high deuterium concentration unit side surface of the structure, and a low concentration formation means which places the low deuterium concentration unit in a state having a low deuterium concentration relative to that of the high deuterium concentration unit, the high concentration formation means having a voltage generation unit, a positive electrode disposed opposing the high deuterium concentration unit side surface of the structure with a space provided therebetween, an electrolytic solution supply means which supplies an electrolytic solution containing heavy water to the high deuterium concentration unit, and a gas discharge channel through which gas is discharged from the high deuterium concentration unit, wherein a voltage difference is applied between the structure and the positive electrode by the voltage generation unit, using the structure as a negative electrode, thereby electrolyzing the electrolytic solution and generating the aforementioned deuterium, and when the deuterium penetrates through the structure from the high deuterium concentration unit toward the low deuterium concentration unit, a substance to undergo nuclide transmutation undergoes nuclide transmutation within the structure by reaction with the deuterium.

The high concentration formation means generates deuterium by electrolyzing the electrolytic solution containing heavy water using the structure as the negative electrode. The high deuterium concentration unit adopts a state having a relatively high concentration of deuterium compared with the low deuterium concentration unit. By providing the high concentration formation means and the low concentration formation means, a deuterium concentration gradient can be formed between the high deuterium concentration unit and the low deuterium concentration unit with the structure sandwiched therebetween. In a nuclide transmutation device having the structure described above, the existence of the above concentration gradient forms a flux of deuterium inside the structure, flowing from the high deuterium concentration unit side toward the low deuterium concentration unit side, and the deuterium isolated from the electrolytic solution by electrolysis is absorbed by the structure and penetrates through the structure toward the low deuterium concentration unit side. As the deuterium penetrates through the structure, a nuclide transmutation reaction occurs within the structure between the deuterium and the substance to undergo nuclide transmutation, thereby enabling nuclide transmutation of the substance to undergo nuclide transmutation.

According to the nuclide transmutation device of the structure described above, the deuterium packing density within the structure can be increased compared with the case where gas pressure is used. By increasing the deuterium packing density in the structure, the amount of the nuclide transmutation reaction of the substance to undergo nuclide transmutation can be increased.

According to the nuclide transmutation device of the structure described above, the deuterium concentration in the high deuterium concentration unit can be maintained within a desired range by the electrolytic solution supply unit. As a result, the high deuterium concentration unit side can be maintained in a state of high deuterium concentration for a long period of time. Further, because the gas which does not penetrate through the structure is exhausted externally through the gas discharge channel, the interior of the high deuterium concentration unit can be maintained within the desired pressure range.

In one aspect of the invention described above, the structure, to which the substance to undergo nuclide transmutation has already been added, is disposed between the high deuterium concentration unit and the low deuterium concentration unit.

In one aspect of the invention described above, the electrolytic solution supply unit comprises an electrolyte supply means which adds an electrolyte containing the substance to undergo nuclide transmutation to the electrolytic solution, the electrolyte supply means supplies the electrolytic solution containing ions of the substance to undergo nuclide transmutation to the high deuterium concentration unit, and the ions of the substance to undergo nuclide transmutation are added to the structure.

By employing the configuration described above, the substance to undergo nuclide transmutation can be brought into contact with the structure at a high concentration.

In particular, by using the configuration in which an electrolyte containing the substance to undergo nuclide transmutation is added to the electrolytic solution and then supplied to the high deuterium concentration unit, the substance to undergo nuclide transmutation can be added continuously to the structure, and the nuclide transmutation reaction can be continued for a long period of time.

In one aspect of the invention described above, the electrolytic solution supply unit comprises an electrolytic solution temperature adjustment unit which adjusts the temperature of the electrolytic solution, and an electrolytic solution supply volume adjustment unit which adjusts the volume of the electrolytic solution supplied from the electrolytic solution supply unit to the high deuterium concentration unit.

By including the electrolytic solution temperature adjustment unit and the electrolytic solution supply volume adjustment unit, the ion concentration in the electrolytic solution inside the high deuterium concentration unit can be adjusted, and therefore the amount of the nuclide transmutation reaction can be controlled, and precipitation of electrolyte salts on the electrode surfaces and the like can be prevented.

In one aspect of the invention described above, the low concentration formation means may comprise an evacuation device which places the low deuterium concentration unit in a state of vacuum.

In one aspect of the invention described above, the low concentration formation means may comprise an inert gas supply device which supplies an inert gas to the low deuterium concentration unit.

According to the aspects of the invention described above, the low concentration formation means comprises the evacuation device or the inert gas supply device. When the evacuation device is used, the low deuterium concentration unit adopts a vacuum state. When the inert gas supply device is used, the low deuterium concentration unit adopts a state in which the hydrogen partial pressure is effectively zero. As a result, the low deuterium concentration unit adopts a state with a relatively low hydrogen pressure compared with the high deuterium concentration unit, and a deuterium pressure difference can be formed in the structure.

In one aspect of the invention described above, the nuclide transmutation device preferably comprises a cooling unit which cools the supplied electrolytic solution so that the temperature of the electrolytic solution supplied to the high deuterium concentration unit by the electrolytic solution supply unit exhibits a prescribed temperature, and a heating unit which heats the low deuterium concentration unit side of the structure to a prescribed temperature.

According to the nuclide transmutation device having the structure described above, by providing the cooling unit and the heating unit, a temperature gradient can be formed across the thickness direction of the structure, so that the temperature at the high deuterium concentration unit side is low, with the temperature increasing in the direction of the low deuterium concentration unit side. The hydrogen-absorbing metal or hydrogen-absorbing alloy that constitutes the structure, and particularly palladium, tends to exhibit better hydrogen absorption at lower temperatures. Accordingly, by forming a temperature gradient, the deuterium is able to exist more readily on the surface on the high deuterium concentration unit side of the structure. As a result, a deuterium concentration gradient can be generated in the thickness direction of the structure, enabling the amount of the nuclide transmutation reaction to be increased.

### {Advantageous Effects of Invention}

According to the present invention, by using electrolysis as a technique for achieving a relatively high hydrogen concentration in the high deuterium concentration unit, the amount of nuclide transmutation can be increased significantly. As a result, certain types of waste treatment which have conventionally been considered impossible, such as detoxification and the like of nuclear waste, can be realized.

### {Brief Description of Drawings}

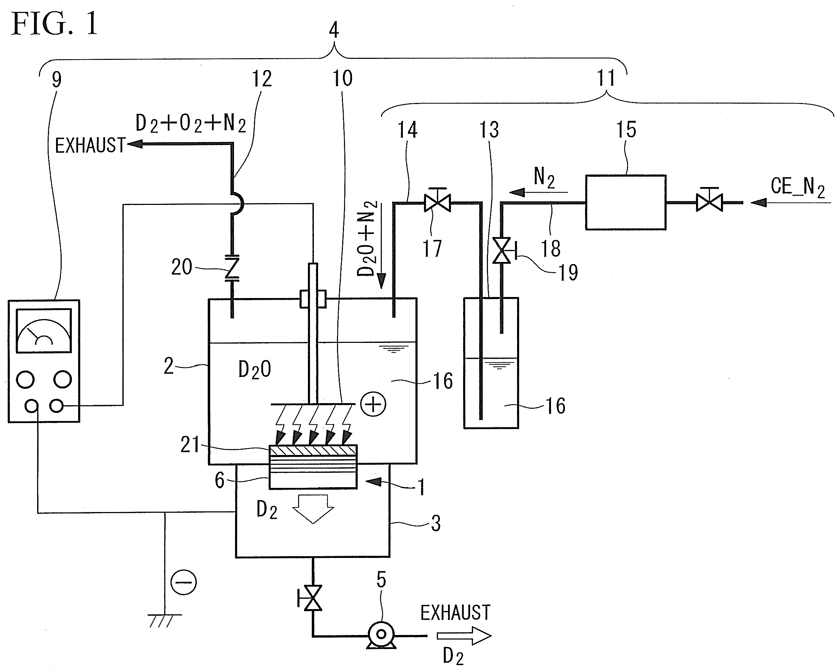

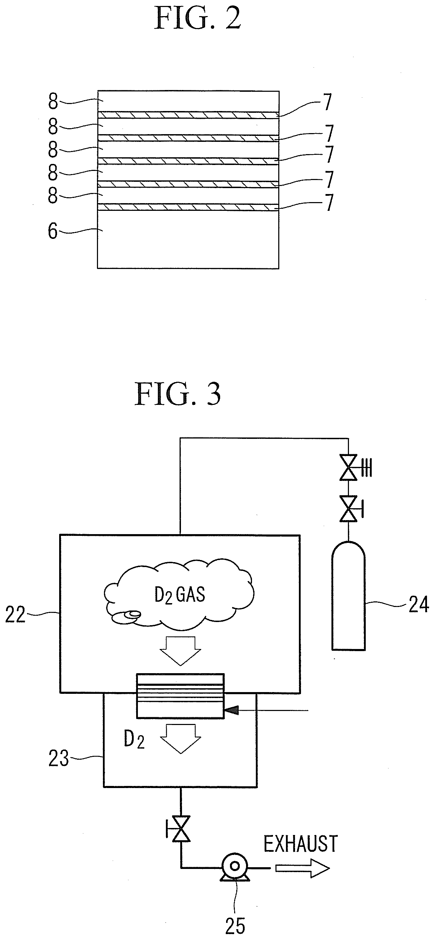

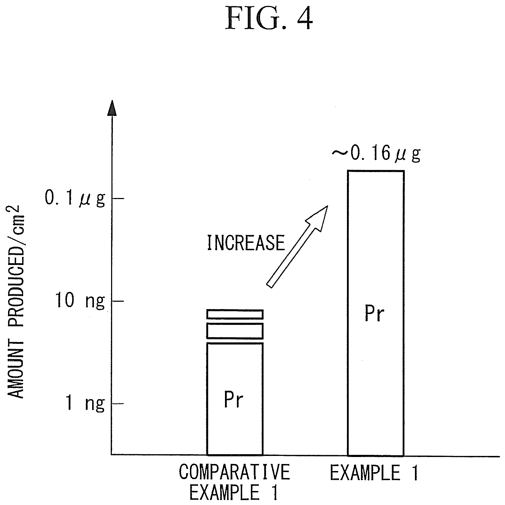

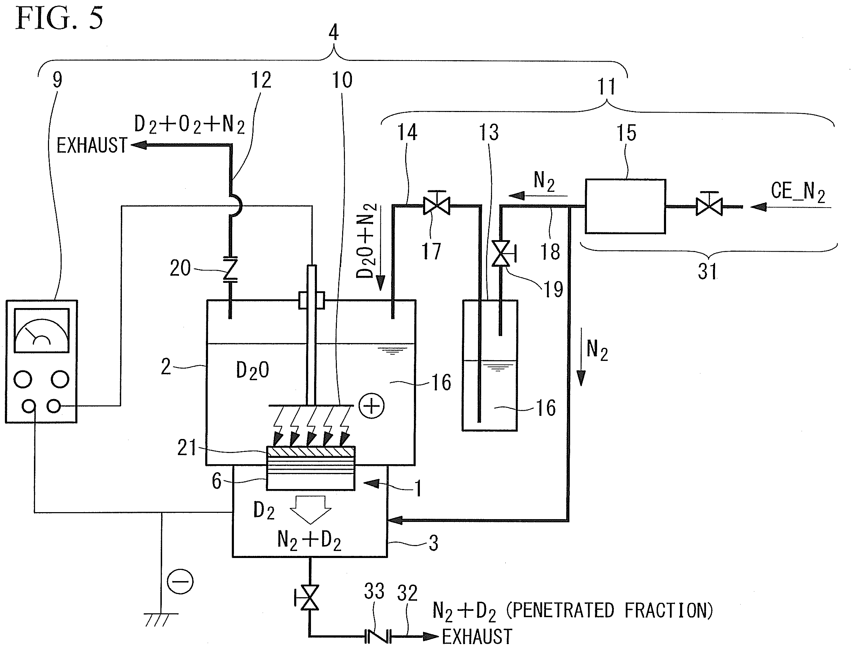

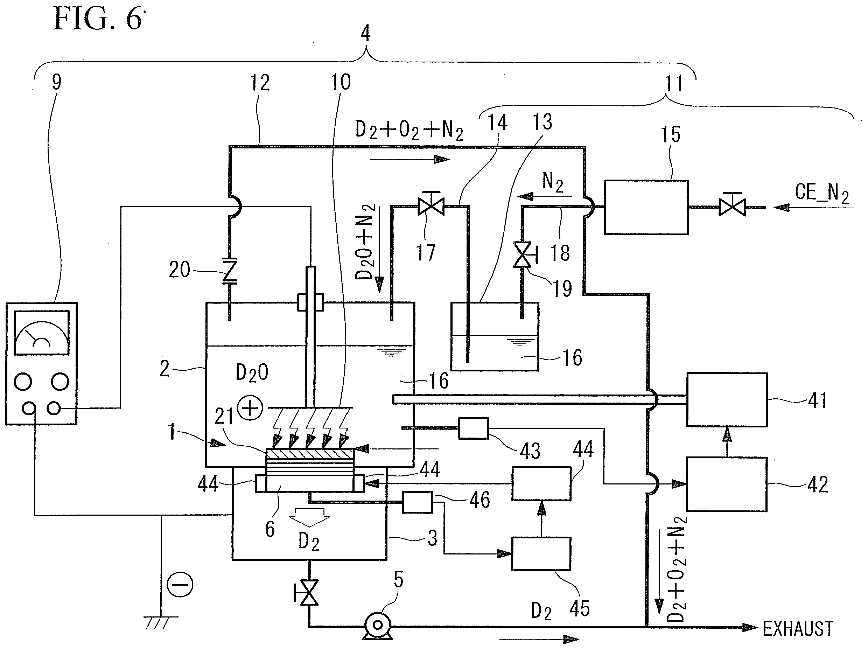

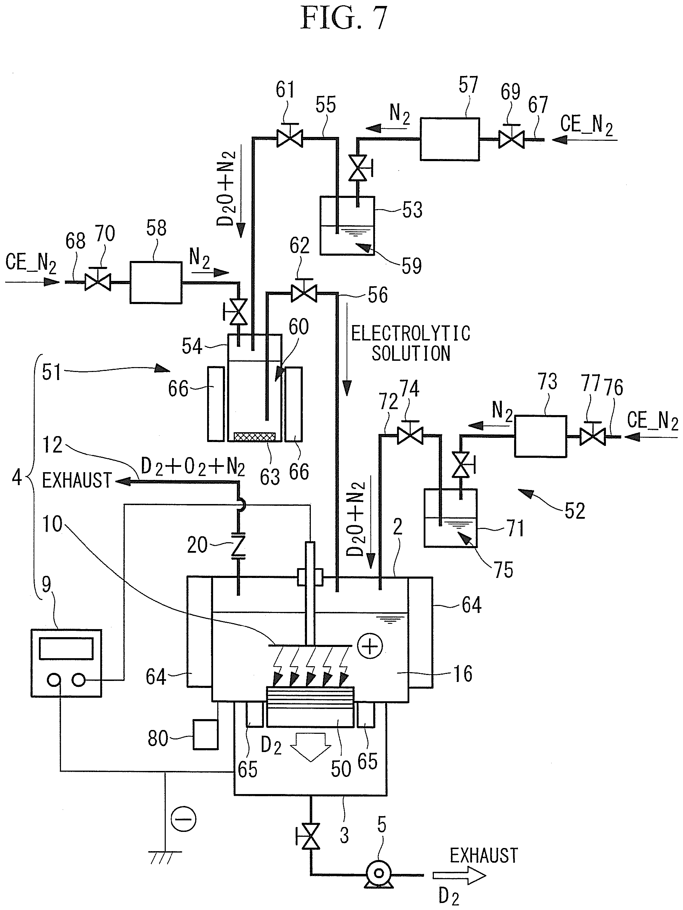

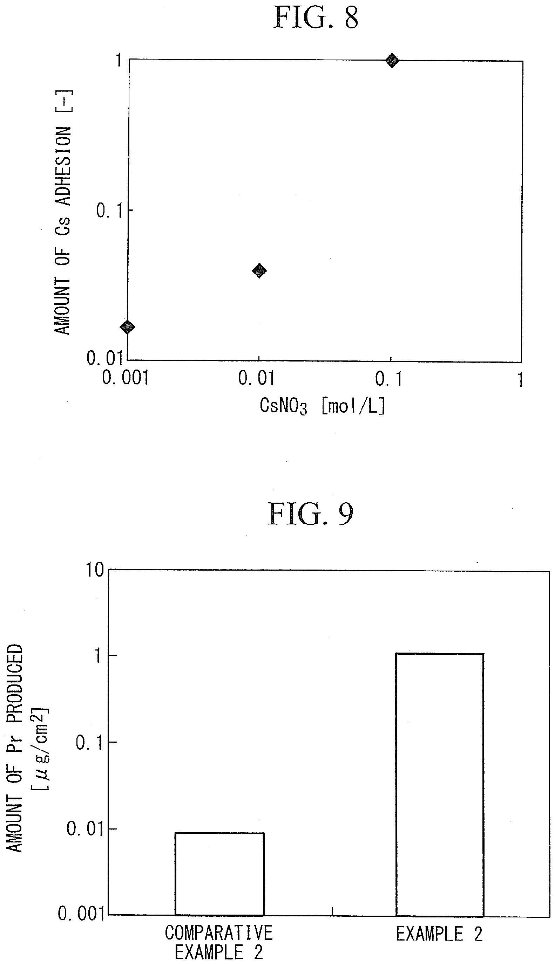

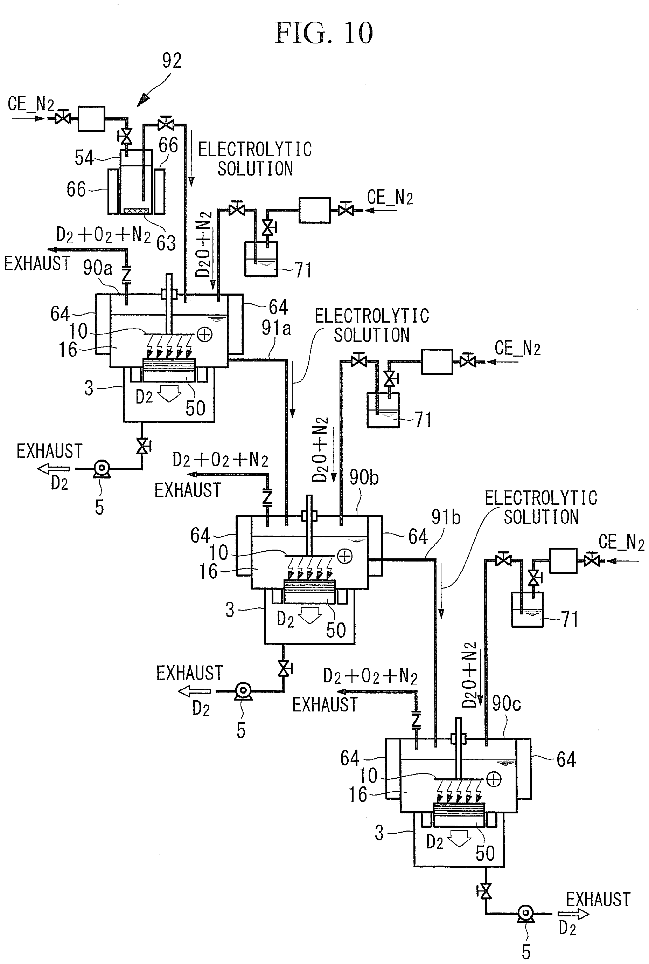

{Fig. 1} A schematic illustration of a nuclide transmutation device according to a first embodiment.
{Fig. 2} A cross-sectional view of a structure.
{Fig. 3} A schematic illustration of a conventional nuclide transmutation device.
{Fig. 4} A graph illustrating the results of ICP-MS analyses in Example 1 and Comparative Example 1.
{Fig. 5} A schematic illustration of a nuclide transmutation device according to a second embodiment.
{Fig. 6} A schematic illustration of a nuclide transmutation device according to a third embodiment.
{Fig. 7} A schematic illustration of a nuclide transmutation device according to a fourth embodiment.
{Fig. 8} A graph illustrating the relationship between the electrolyte concentration and the amount added of the substance to undergo nuclide transmutation.
{Fig. 9} A graph illustrating the results of ICP-MS analyses in Example 2 and Comparative Example 2.
{Fig. 10} A schematic illustration of a nuclide transmutation device according to a second embodiment.

### {Description of Embodiments}

Embodiments of the nuclide transmutation method and the nuclide transmutation device according to the present invention are described below with reference to the drawings.

### {First Embodiment}

Fig. 1 is a schematic illustration of a nuclide transmutation device according to this embodiment. The nuclide transmutation device comprises a structure 1, a high deuterium concentration unit 2, a low deuterium concentration unit 3, a high concentration formation means 4, and a low concentration formation means 5.

The structure 1 has palladium (Pd) or a palladium alloy, or a hydrogen-absorbing metal other than palladium or a hydrogen-absorbing alloy other than a palladium alloy, and a substance which has a relatively low work function compared with the hydrogen-absorbing metal or alloy. The substance having a relatively low work function is, for example, a substance having a work function of less than 3 eV, and specific examples include CaO and the like. In the nuclide transmutation device, the structure also performs the role of a negative electrode.

Fig. 2 illustrates one example of the structure 1. The structure 1 illustrated in Fig. 2 has a 10-layer laminated structure in which CaO layers 7 (thickness: 2 nm) and Pd layers 8 (thickness: 20 nm) are laminated alternately on top of a bulk Pd substrate 6 (for example with dimensions of 25 mm × 25 mm × 0.1 mm). The CaO layers 7 and the Pd layers 8 are deposited alternately by argon ion beam sputtering on the Pd substrate following an etching treatment.

A substance 21 to undergo nuclide transmutation is added to one surface (the surface on the opposite side from the Pd substrate) of the structure 1 using a deposition treatment such as vacuum deposition or sputtering. Examples of the substance 21 to undergo nuclide transmutation include cesium (Cs), carbon (C), strontium (Sr) and sodium (Na).

In the present embodiment, a structure in which a substance to undergo nuclide transmutation has not been added to the structure surface can also be used.

The high deuterium concentration unit 2 is formed on the side of one surface of the structure 1 and the low deuterium concentration unit 3 is formed on the side of the other surface of the structure (on the side of the Pd substrate 6), thereby sandwiching the structure 1 in such a manner that the interior of each unit can be held in an airtight state.

The high deuterium concentration unit 2 comprises the high concentration formation means 4, and is held in a state having a higher deuterium concentration than that of the low deuterium concentration unit 3.

The high concentration formation means 4 is composed of a voltage generation device 9, a positive electrode 10, an electrolytic solution supply device 11, and a gas discharge channel 12. The positive electrode 10 is composed of platinum or the like. The positive electrode 10 is disposed inside the high deuterium concentration unit 2 opposing the high deuterium concentration unit side surface of the structure 1 with a space provided therebetween. The voltage generation device 9 is positioned outside the high deuterium concentration unit 2, and can apply a voltage difference between the positive electrode 10 and the negative electrode 1.

The electrolytic solution supply device 11 comprises an electrolytic solution tank 13, an electrolytic solution supply channel 14, a dehumidifier unit 15, and a gas source (not shown in the figure). The electrolytic solution tank 13 is a container which holds an electrolytic solution 16 containing deuterium. The electrolytic solution tank 13 is connected to the high deuterium concentration unit 2 via the electrolytic solution supply channel 14. One end of the electrolytic solution supply channel 14 is positioned immersed in the electrolytic solution 16 held inside the electrolytic solution tank 13. The other end of the electrolytic solution supply channel 14 is connected to the high deuterium concentration unit 2 so as to enable supply of the electrolytic solution 16 to the high deuterium concentration unit 2. A valve 17 is provided in the electrolytic solution supply channel 14.

Further, the dehumidifier unit 15 and the gas source are connected in sequence to the electrolytic solution tank 13 via a gas supply channel 18. A valve 19 is provided in the gas supply channel 18. One end of the gas supply channel 18 is disposed inside the electrolytic solution tank 13 in a position not making contact with the electrolytic solution 16. The dehumidifier unit 15 is a filter or the like fitted with a dehumidification function using silica gel or the like. The gas source is a gas cylinder filled with an inert gas such as nitrogen (N₂) or argon (Ar) and a cold evaporator (CE) or the like.

In the electrolytic solution supply device 11, CE (Cold Evaporator)_N₂ from the gas source is dehumidified in the dehumidifier unit 15, and can then flow into the electrolytic solution tank 13. By supplying the gas into the electrolytic solution tank 13, the electrolytic solution 16 is forced out of the electrolytic solution tank 13, flows through the electrolytic solution supply channel 14, and can be supplied to the high deuterium concentration unit 2.

The gas discharge channel 12 is connected to the high deuterium concentration unit 2 via a check valve (< 1 atmosphere) 20 so as to enable gas inside the high deuterium concentration unit 2 to be discharged externally.

The low deuterium concentration unit 3 comprises the low concentration formation means 5. The low concentration formation means 5 is an evacuation device such as a turbomolecular pump or a dry pump, and by performing evacuation, places the inside of the low deuterium concentration unit 3 in a state having a lower deuterium pressure than the high deuterium concentration unit 2.

Next is a description of a nuclide transmutation method according to the present embodiment.

The nuclide transmutation method according to this embodiment comprises an electrolytic solution supply step, a high concentration formation step, a low concentration formation step, a nuclide transmutation step, and a gas discharge step.

First, the structure 1 containing the added substance 21 to undergo nuclide transmutation is installed in the nuclide transmutation device so that the interiors of the high deuterium concentration unit 2 and the low deuterium concentration unit 3 are both sealed in a liquid-tight and airtight manner. At this time, the Pd substrate 6 of the structure 1 is positioned facing the low deuterium concentration unit 3.

### (Electrolytic Solution Supply Step)

Next, the electrolytic solution 16 is supplied from the electrolytic solution supply device 11 into the interior of the high deuterium concentration unit 2. The electrolytic solution 16 is a heavy water base solution containing from 0.001 mol/l to a saturated concentration of an electrolyte salt. Incorporating the electrolyte salt promotes the electrolysis of the heavy water. Although there are no particular limitations on the electrolyte salt, if the electrolyte salt contains a substance to undergo nuclide transmutation, then not only is the electrolysis promoted, but the substance to undergo nuclide transmutation can be supplied continuously from the electrolytic solution supply device 11, which is preferable in terms of enabling the nuclide transmutation reaction to be continued for a long period of time. Examples of electrolyte salts containing a substance to undergo nuclide transmutation include CsNO₃, CsOH, NaNO₃, Sr(NO₃)₂, and Ba(NO₃)₂. As a result, the electrolytic solution 60 contains ions of the substance to undergo nuclide transmutation (for example, Cs⁺, Sr²⁺, Na⁺ and Ba²⁺). The electrolytic solution 16 is maintained at an amount sufficient to keep the positive electrode 10 immersed at all times.

Further, the electrolytic solution 16 can also be supplied as appropriate to the high deuterium concentration unit 2 during the high concentration formation step. The amount of the electrolytic solution 16 supplied and the timing of the supply may be determined appropriately in accordance with the liquid height of the heavy water (and must be an amount sufficient to keep the positive electrode immersed at all times).

### (Low Concentration Formation Step)

Next, the interior of the low deuterium concentration unit 3 is placed in a state of low deuterium pressure using the low concentration formation means 5. Specifically, a vacuum pump is used to evacuate the inside of the low deuterium concentration unit 3 to a state of vacuum, and this state is maintained. The pressure inside the low deuterium concentration unit 3 is preferably set to < 0.1 Pa.

### (High Concentration Formation Step)

Subsequently, electric power is applied to the positive electrode 10 using the voltage generation device 9, and a voltage difference is generated between the positive electrode 10 and the negative electrode (the structure) 1. The voltage difference is set to at least 2 V. As a result, the heavy water (D₂O) undergoes electrolysis at the surface of the structure 1 (the surface on the opposite side from the Pd substrate), and deuterium (D₂) is generated. If the voltage difference is less than 2 V, then the electrolysis reaction does not proceed satisfactorily.

### (Nuclide Transmutation Step)

As a result of performing the low concentration formation step and the high concentration formation step, a deuterium concentration gradient is produced between one surface (the high deuterium concentration unit side) of the structure 1 and the other surface (the low deuterium concentration unit side) of the structure 1. As a result, the deuterium on the side of the high deuterium concentration unit 2 penetrates through the structure 1 and migrates to the low deuterium concentration unit side. As this deuterium penetrates through the structure 1 to which the substance 21 to undergo nuclide transmutation has been added, a nuclide transmutation reaction occurs, and the substance 21 to undergo nuclide transmutation undergoes nuclide transmutation to form a different substance. For example, a nuclide transmutation reaction such as ¹³³Cs → ¹⁴¹Pr, ¹²C → ²⁴Mg → ²⁸Si → ³²S, ⁸⁸Sr → ⁹⁶Mo, ²³Na → ²⁷Na → ²⁷Mg → ²⁷Al, or ¹³⁸Ba → ¹⁵⁰Sm occurs.

### (Gas Discharge Step)

As the electrolysis proceeds inside the high deuterium concentration unit 2, deuterium gas and oxygen gas are produced. Further, when the electrolytic solution 16 is supplied, nitrogen gas also flows into the high deuterium concentration unit 2. In the present embodiment, if the pressure inside the high deuterium concentration unit 2 reaches 1 atmosphere (1 × 10⁵ Pa) or higher, then the check valve 20 opens and gas is discharged from inside the high deuterium concentration unit 2.

### (Example 1)

A nuclide transmutation reaction was conducted using a structure having a 10-layer laminated structure prepared by alternately laminating CaO layers (thickness: 2 nm) and Pd layers (thickness: 20 nm) on top of a bulk Pd substrate (25 mm × 25 mm × 0.1 mm).

The surface of the structure on the opposite side from the Pd substrate was formed as a Pd layer. An ion injection method was used to add ¹³³Cs to this surface on the opposite side from the Pd substrate. Following determination by XPS (X-ray photoelectron spectroscopy) that the initial surface concentration of ¹³³Cs in the structure was 15 × 10¹⁶ /cm², the structure was installed in a nuclide transmutation device in accordance with the first embodiment. The amount of ¹⁴¹Pr on the surface of the structure was below the detection limit of 10¹² / cm².

The low deuterium concentration unit was evacuated to a vacuum state of 10⁻³ Pa using a vacuum pump, and this state was maintained.

A 0.1 mol/l heavy water base solution of cesium nitrate was used as the electrolytic solution. A voltage difference of 3 V to 5 V was generated between the positive electrode and the negative electrode using the voltage generation device, and the heavy water was electrolyzed. The electrolysis was continued for 120 hours (5 days), and was then halted.

The structure was removed from the nuclide transmutation device, and following evaporation of the heavy water from the surface, the surface composition of the structure was analyzed by XPS and ICP-MS.

### (Comparative Example 1)

A nuclide transmutation test was conducted using the conventional nuclide transmutation device illustrated in Fig. 3. In this nuclide transmutation device, a deuterium gas cylinder was connected to a high deuterium concentration unit 22 as a high concentration formation means 24. Deuterium (D₂) gas was introduced into the high deuterium concentration unit 22 from the deuterium gas cylinder at a pressure of 1.01325 × 10⁵ Pa. With these exceptions, the nuclide transmutation test was conducted in the same manner as Example 1, and following the test, the surface composition of the structure was analyzed by XPS and ICP-MS.

The results of the XPS analysis revealed that the surface composition of the structure of Example 1 had a ¹³³Cs concentration of 9 × 10¹⁵ /cm² and a ¹⁴¹Pr concentration of approximately 7 × 10¹⁴ /cm². These results confirmed that, in Example 1, the ¹³³Cs concentration on the surface of the structure had decreased following the test, whereas the ¹⁴¹Pr, which did not exist before the test, existed on the surface following the test.

The results of the ICP-MS analyses are shown in Fig. 4. In this figure, the vertical axis illustrates the amount of ¹⁴¹Pr produced following the nuclide transmutation. The amounts of ¹⁴¹Pr produced following the nuclide transmutation were between 0.1 ng/cm² to 10 ng/cm² in Comparative example 1, and 0.16 µg/cm² in Example 1.

The above results confirmed that by using the nuclide transmutation device and the nuclide transmutation method according to the first embodiment, the amount of the product substance produced following the nuclide transmutation was approximately an order of magnitude greater than that produced using the conventional method. This is because generating the deuterium on the structure by electrolysis enables the deuterium concentration in the high deuterium concentration unit to be increased more easily, and therefore the deuterium packing density in the structure can be increased, and the amount of the nuclide transmutation reaction can also be increased.

When electrolysis is used, the deuterium pressure in the vicinity of the electrode in the high deuterium concentration unit can be increased to approximately 100 to 1,000 atmospheres. If a similar atmosphere was to be created using deuterium gas, then the deuterium gas would need to be introduced at a pressure of approximately 1,000 atmospheres. When gas is introduced at a pressure exceeding 10 atmospheres, the test safety standards change, the test conditions become more stringent, and the size of the test device increases. In comparison, electrolysis can be performed at normal pressure, meaning the deuterium pressure can be increased without increasing the size of the test device, and the test conditions are also easily satisfied.

### {Second Embodiment}

Fig. 5 is a schematic illustration of a nuclide transmutation device according to this embodiment. With the exception of having a different low concentration formation means, the nuclide transmutation device has the same structure as the nuclide transmutation device of the first embodiment.

The low concentration formation means comprises an inert gas supply device 31 and an exhaust channel 32. In the present embodiment, the inert gas supply device 31 is composed of a gas source (not shown in the figure) and the dehumidifier unit 15. The inert gas supply device 31 (namely, the gas source and the dehumidifier unit 15) shown in Fig. 5 is composed of the same gas source and dehumidifier unit 15 that constitute the electrolytic solution supply device 11 of the high concentration formation means 4. One end of the exhaust channel 32 is connected to the low deuterium concentration unit 3 via a check valve 33.

In this embodiment, with the exception that an inert gas is supplied to the low deuterium concentration unit 3 to form an inert environment during the low concentration formation step, the nuclide transmutation reaction is conducted using the same steps as those described for the first embodiment.

The inert gas can be supplied to the low deuterium concentration unit 3 by switching the valve 19 of the electrolytic solution supply device 11. The interior of the low deuterium concentration unit 3 is set to a pressure of 1 atmosphere. As a result, the deuterium pressure inside the low deuterium concentration unit 3 can be reduced to effectively zero, and the inside of the low deuterium concentration unit 3 can be maintained in a state having a lower deuterium pressure than the high deuterium concentration unit 2.

When electrolysis is performed by the high concentration formation means, deuterium penetrates through the structure and enters the low deuterium concentration unit 3, but when the pressure inside the low deuterium concentration unit 3 exceeds a prescribed value (1 atmosphere), the check valve 33 opens and the gas (inert gas and deuterium gas) inside the high deuterium concentration unit 2 is exhausted externally.

According to this embodiment, the interior of the low deuterium concentration unit 3 can be changed to a region in which deuterium is essentially non-existent without using a vacuum pump. Because an environment having a relatively low deuterium pressure compared with the high deuterium concentration unit 2 can be formed, a deuterium gradient that is sufficient for the nuclide transmutation reaction to proceed can be formed in the structure. In this embodiment, the deuterium gradient acts as the driving force that causes the deuterium to penetrate through the structure, enabling the nuclide transmutation reaction to proceed. Further, the inert gas supply device 31 can use the same equipment as the electrolytic solution supply device 11, and because a vacuum pump and the like need not be used, the device can be simplified and the initial costs can be reduced.

### {Third Embodiment}

Fig. 6 is a schematic illustration of a nuclide transmutation device according to this embodiment. A feature of this nuclide transmutation device is the inclusion of a cooling unit and a heating unit. Those structures for which no description is provided are deemed to be the same as those of the nuclide transmutation device according to the first embodiment.

The cooling unit 41 is connected to the high deuterium concentration unit 2 in a manner that enables the electrolytic solution 16 supplied to the high deuterium concentration unit 2 to be cooled to a prescribed temperature. The cooling unit 41 is composed of a chiller or a thermocooler or the like, and the cooling portion of the unit is inserted in the solution to cool the electrolytic solution 16 to a prescribed temperature. A control unit 42 which controls the cooling of the electrolytic solution 16 by the cooling unit 41 is connected to the cooling unit 41. The control unit 42 has a temperature detection means 43 that can detect the temperature of the electrolytic solution 16 inside the high deuterium concentration unit 2, and based on the temperature detected by this temperature detection means 43, the cooling unit 41 is controlled to adjust the electrolytic solution 16 to the prescribed temperature. The temperature detection means 43 may be composed of a thermocouple or the like.

The heating unit 44 is provided on the structure 1 on the side of the low deuterium concentration unit 3 (the Pd substrate side). The heating unit 44 heats the low deuterium concentration unit 3 side (Pd substrate side) of the structure 1 to a prescribed temperature using a nichrome heater or the like. A control unit 45 which controls the heating of the structure 1 by the heating unit 44 is connected to the heating unit 44. The control unit 45 has a temperature detection means 46 that can detect the temperature of the structure 1, and based on the temperature detected by this temperature detection means 46, the heating unit 44 is controlled to adjust the low deuterium concentration unit 3 side (Pd substrate side) of the structure 1 to the prescribed temperature. The temperature detection means 46 may be composed of a thermocouple or the like.

In this embodiment, one end of the gas discharge channel 12 is connected to the downstream stage of the evacuation device of the low concentration formation means 5.

The nuclide transmutation method according to the present embodiment comprises a cooling step and a heating step. The other steps are the same as those of the first embodiment.

### (Cooling Step)

The electrolytic solution 16 supplied to the high deuterium concentration unit 2 is cooled to a prescribed temperature. Specifically, the temperature of the electrolytic solution 16 supplied to the high deuterium concentration unit 2 is detected by the temperature detection means 43, and the thus obtained temperature information is transmitted to the control unit 42. The control unit 42 controls the cooling of the electrolytic solution 16 by the cooling unit 41 based on this temperature information. The temperature of the electrolytic solution 16 is maintained within a range from 0°C to 30°C.

### (Heating Step)

In parallel with the cooling step, the low deuterium concentration unit 3 side (Pd substrate side) of the structure 1 is heated to a prescribed temperature by the heating unit 44. Specifically, the temperature of the low deuterium concentration unit 3 side (Pd substrate side) of the structure 1 is detected by the temperature detection means 46, and the thus obtained temperature information is transmitted to the control unit 45. The control unit 45 controls the heating of the structure 1 by the heating unit 44 based on this temperature information. The temperature of the low deuterium concentration unit 3 side (Pd substrate side) of the structure 1 is maintained within a range from 50°C to 300°C.

The Pd layer 8 that represents the surface layer of the structure 1 has a property of absorbing deuterium readily at low temperature. By cooling the electrolytic solution 16, the amount of deuterium packed on the high deuterium concentration unit 2 side (Pd layer) of the structure 1 is increased. Because the amount of nuclide transmutation is dependent on the amount of deuterium, by increasing the deuterium density of the structure 1, the amount of nuclide transmutation can be increased.

On the other hand, by increasing the temperature of the structure 1, diffusion of the deuterium can be promoted. By heating the low deuterium concentration unit 3 side of the structure 1 and forming a temperature gradient in the thickness direction of the structure, the amount of deuterium penetration through the structure can be increased.

### {Fourth Embodiment}

Fig. 7 is a schematic illustration of a nuclide transmutation device according to this embodiment. The nuclide transmutation device of the fourth embodiment comprises a structure 50, the high deuterium concentration unit 2, the low deuterium concentration unit 3, the high concentration formation means 4, the low concentration formation means 5, a first electrolytic solution supply device (electrolytic solution supply unit) 51, and a second electrolytic solution supply device 52.

The structure 50 of the fourth embodiment has palladium (Pd) or a palladium alloy, or a hydrogen-absorbing metal other than palladium or a hydrogen-absorbing alloy other than a palladium alloy, and a substance (such as CaO) which has a relatively low work function compared with the hydrogen-absorbing metal or alloy. The structure 50 may have the same laminated structure as the structure 1.

In the structure 50 of Fig. 7, a substance to undergo nuclide transmutation has not been added to one surface of the structure by a deposition treatment. However, in Fig. 7, a structure in which a substance to undergo nuclide transmutation has already been added to the structure, in a similar manner to the first to third embodiments, may also be used. In this case, the substance 21 to undergo nuclide transmutation is added to the surface of the structure on the opposite side from the Pd substrate using vacuum deposition or a sputtering method or the like.

In the nuclide transmutation device of the present embodiment, the high deuterium concentration unit 2 is formed on the side of one surface of the structure 50 and the low deuterium concentration unit 3 is formed on the side of the other surface of the structure (on the side of the Pd substrate), thereby sandwiching the structure 50 in such a manner that the interior of each unit can be held in an airtight state.

As illustrated in Fig. 7, in this embodiment a temperature regulator 64 is installed around the periphery of the high deuterium concentration unit 2. Further, a heating unit 65 is installed around the periphery of the structure 50 on the side of the low deuterium concentration unit 3.

The low concentration formation means 5 has the same configuration as that of the first embodiment. The low concentration formation means may also have a configuration similar to that of the second embodiment, in which an inert gas is supplied to the interior of the low deuterium concentration unit 3.

The high concentration formation means 4 is composed of the voltage generation device 9, the positive electrode 10, the first electrolytic solution supply device 51 and the gas discharge channel 12. The voltage generation device 9, the positive electrode 10 and the gas discharge channel 12 have the same structures as those described for the first embodiment.

The first electrolytic solution supply device 51 comprises a first electrolytic solution tank 53, a second electrolytic solution tank 54, electrolytic solution supply channels 55 and 56, dehumidifier units 57 and 58, and a gas source (not shown in the figure).

A solution (heavy water) containing deuterium is stored in the first electrolytic solution tank 53. The first electrolytic solution tank 53 is connected to the second electrolytic solution tank 54 via the electrolytic solution supply channel 55. One end of the electrolytic solution supply channel 55 is positioned immersed in an electrolytic solution 59 held inside the first electrolytic solution tank 53. A valve 61 is provided in the electrolytic solution supply channel 55.

An electrolytic solution 60 supplied from the first electrolytic solution tank 53 is held in the second electrolytic solution tank 54. In Fig. 7, an electrolyte salt (electrolyte salt supply means) 63 containing a substance to undergo nuclide transmutation is disposed inside the second electrolytic solution tank 54. The electrolyte salt 63 is disposed in a position either partially or totally immersed in the electrolytic solution 60, such as on the bottom of the second electrolytic solution tank 54. The nuclide transmutation device of Fig. 7 may also have a configuration in which the electrolyte salt containing the substance to undergo nuclide transmutation is supplied to the electrolytic solution 60 from a location outside the second electrolytic solution tank 54 (for example, a configuration including a tank for holding the electrolyte salt, and a valve and the like). The electrolyte salt containing the substance to undergo nuclide transmutation may be CsNO₃, CsOH, NaNO₃, Sr(NO₃)₂ or Ba(NO₃)₂ or the like. The electrolyte salt containing the substance to undergo nuclide transmutation is dissolved in the electrolytic solution 60 inside the second electrolytic solution tank 54. Accordingly, the electrolytic solution 60 contains ions (for example, Cs⁺, Sr²⁺, Na⁺ or Ba²⁺) of the substance to undergo nuclide transmutation.

A heater 66 is installed around the periphery of the second electrolytic solution tank 54. The heater 66 adjusts the temperature of the electrolytic solution 60 inside the second electrolytic solution tank 54.

The second electrolytic solution tank 54 is connected to the high deuterium concentration unit 2 via the electrolytic solution supply channel 56. One end of the electrolytic solution supply channel 56 is positioned immersed in the electrolytic solution 60 held inside the second electrolytic solution tank 54. A valve 62 is provided in the electrolytic solution supply channel 56.

The dehumidifier units 57 and 58 and the gas source are connected to the first electrolytic solution tank 53 and the second electrolytic solution tank 54 respectively via gas supply channels 67 and 68 respectively. Valves 69 and 70 are installed in the gas supply channels 67 and 68 respectively. The gas supply channels 67 and 68, the dehumidifier units 57 and 58, and the gas source are similar to those described in the first embodiment.

The second electrolytic solution supply device 52 comprises a third electrolytic solution tank 71, an electrolytic solution supply channel 72, a dehumidifier unit 73, and a gas source (not shown in the figure).

A solution (heavy water) containing deuterium is stored in the third electrolytic solution tank 71. The third electrolytic solution tank 71 is connected to the high deuterium concentration unit 2 via the electrolytic solution supply channel 72. One end of the electrolytic solution supply channel 72 is positioned immersed in an electrolytic solution 75 held inside the third electrolytic solution tank 71. A valve 74 is provided in the electrolytic solution supply channel 72.

The dehumidifier unit 73 and the gas source are connected to the third electrolytic solution tank 71 via a gas supply channel 76. A valve 77 is installed in the gas supply channel 76. The gas supply channel 76, the dehumidifier unit 73, and the gas source are similar to those described in the first embodiment.

The gas discharge channel 12 is connected to the high deuterium concentration unit 2 via the check valve (< 1 atmosphere) 20 so as to enable gas inside the high deuterium concentration unit 2 to be discharged externally.

A concentration measuring unit 80 is connected to the high deuterium concentration unit 2. The concentration measuring unit 80 is composed of an ion concentration meter or a pH meter, and measures the ion concentration in the electrolytic solution inside the high deuterium concentration unit 2.

Next is a description of a nuclide transmutation method according to the fourth embodiment.

In a similar manner to the first embodiment, the structure 50 is installed in such a manner that the interiors of the high deuterium concentration unit 2 and the low deuterium concentration unit 3 are both sealed in a liquid-tight and airtight manner. At this time, the substrate of the structure 50 is positioned facing the low deuterium concentration unit 3.

### (Electrolytic Solution Supply Step)

The electrolytic solution is supplied from the first electrolytic solution supply device 51 to the interior of the high deuterium concentration unit 2.

CE_N₂ is supplied from the gas source to the first electrolytic solution tank 53 via the gas supply channel 67 and the dehumidifier unit 57. The heavy water inside the first electrolytic solution tank 53 is transported from the first electrolytic solution tank 53, through the electrolytic solution supply channel 55, and into the second electrolytic solution tank 54 under the action of the N₂.

Inside the second electrolytic solution tank 54, the electrolyte salt 63 containing the substance to undergo nuclide transmutation dissolves in the electrolytic solution 60. The concentration of ions of the substance to undergo nuclide transmutation in the second electrolytic solution tank 54 is adjusted by the amount of heavy water supplied to the second electrolytic solution tank 54 and the temperature of the electrolytic solution 60. When the electrolyte salt is introduced from outside the system, the ion concentration may also be adjusted by the amount of the electrolyte salt introduced.

The electrolytic solution 60 containing the ions of the substance to undergo nuclide transmutation is supplied from the second electrolytic solution tank 54, through the electrolytic solution supply channel 56, and into the high deuterium concentration unit 2.

### (Low Concentration Formation Step)

Next, the interior of the low deuterium concentration unit 3 is placed in a state of low deuterium pressure using the low concentration formation means 5, in the same manner as that described for the first embodiment.

### (High Concentration Formation Step)

Electric power is applied to the positive electrode 10 using the voltage generation device 9, and a voltage difference is generated between the positive electrode 10 and the negative electrode (the structure 50) in a similar manner to that described for the first embodiment. As a result, the heavy water undergoes electrolysis at the surface of the structure 50, and deuterium gas and oxygen gas are generated. A deuterium concentration gradient is generated between the high deuterium concentration unit 2 and the low deuterium concentration unit 3 with the structure 50 sandwiched therebetween, and the deuterium penetrates through the structure 50 from the high deuterium concentration unit 2 and migrates to the low deuterium concentration unit 3.

At this time, a cooling step and a heating step may be performed in a similar manner to the third embodiment.

### (Cooling Step)

A temperature detection means (not shown in the figure) detects the temperature of the electrolytic solution 16 supplied to the high deuterium concentration unit 2. A control unit (not shown in the figure) controls the temperature of the electrolytic solution 16 using the temperature regulator 64. The temperature of the electrolytic solution 16 is maintained within a range from 0°C to 30°C.

### (Heating Step)

The heating unit 65 heats the low deuterium concentration unit 3 side of the structure 50 to a prescribed temperature. The temperature of the low deuterium concentration unit 3 side of the structure 50 is maintained within a range from 50°C to 300°C.

By employing the above steps, the amount of deuterium packed on the high deuterium concentration unit 2 side of the structure 50 is increased.

### (Nuclide Transmutation Step)

When power is applied to the positive electrode 10 by the voltage generation device 9, the ions of the substance to undergo nuclide transmutation within the electrolytic solution migrate toward the structure (50) (negative electrode) and penetrate into the interior of the structure 50.

As the deuterium penetrates through the structure 50, the substance (ions) to undergo nuclide transmutation contained within the electrolytic solution undergoes nuclide transmutation within the structure 50 via a reaction such as ¹³³Cs → ¹⁴¹Pr, ¹³⁸Ba → ¹⁵⁰Sm, ⁸⁸Sr → ⁹⁶Mo, or ²³Na → ²⁷Na → ²⁷Mg → ²⁷Al. Similarly, when the substance to undergo nuclide transmutation is added to the surface of the structure, a nuclide transmutation reaction occurs as the deuterium penetrates through the structure. The reaction formulas in this case are the same as those mentioned above. When ¹²C is added as a substance to undergo nuclide transmutation, a reaction represented by ¹²C → ²⁴Mg → ²⁸Si → ³²S occurs.

The amount of the nuclide transmutation reaction is dependent on the amount of deuterium that penetrates into the structure, and the amount of ions of the substance to undergo nuclide transmutation adhered to the structure.

When the voltage difference between the positive electrode 10 and the structure 50 is constant, the higher the concentration of ions in the electrolytic solution inside the high deuterium concentration unit 2 becomes, the thinner the electric double layer at the surfaces of the positive electrode 10 and the structure 50 (the negative electrode) becomes. Because the electric field intensity in the electric double layer increases, the energy accelerating the ions of the substance to undergo nuclide transmutation toward the structure 50 also increases.

Fig. 8 is a graph illustrating the correlation between the concentration of the electrolyte salt (CsNO₃) within the electrolytic solution (heavy water base) and the amount of Cs adhered to the surface of the structure. In the figure, the horizontal axis represents the CsNO₃ concentration and the vertical axis represents the amount of Cs adhesion. The structure had the laminated structure shown in Fig. 2. The voltage difference between the positive electrode and the negative electrode was set to 1 V, and after continued application for 10 seconds, the amount of Cs adhered to the structure surface was measured using ICP-MS. As illustrated in Fig. 8, the higher the concentration of ions in the electrolytic solution, the greater the amount of the substance to undergo nuclide transmutation adhered within the structure.

The higher the electric field intensity in the electric double layer, the more the electrolysis reaction at the positive electrode 10 and the structure 50 (the negative electrode) is promoted. As a result, the amount of deuterium generated also increases.

Accordingly, the higher the concentration of ions in the electrolytic solution, the greater the amount of the nuclide transmutation reaction becomes. In other words, by adjusting the ion concentration, the amount of nuclide transmutation can be controlled. The conditions which yield the greatest amount of the nuclide transmutation reaction include a saturated concentration of the electrolyte salt containing the substance to undergo nuclide transmutation. For example, in the case of CsNO₃, the saturated concentration at 20°C is 1.2 mol/l.

Furthermore, the amount of heavy water consumed by the electrolysis reaction is greater than the amount of ions of the substance to undergo nuclide transmutation consumed by the nuclide transmutation reaction. As a result, as the reaction continues, the concentration of ions in the electrolytic solution inside the high deuterium concentration unit 2 increases, and if the saturated concentration is exceeded, then the electrolyte salt precipitates on the surfaces of the electrodes and the walls and the like. If the electrolyte salt precipitates on the electrode surfaces, then the reaction described above is inhibited.

The present embodiment comprises a concentration adjustment step of adjusting the concentration of ions of the substance to undergo nuclide transmutation in the electrolytic solution inside the high deuterium concentration unit 2.

### (Concentration Adjustment Step)

The ion concentration in the electrolytic solution inside the high deuterium concentration unit 2 is controlled by the concentration measuring unit 80. The ion concentration inside the high deuterium concentration unit 2 is adjusted on the basis of the ion concentration acquired by the concentration measuring unit 80.

When the ion concentration is to be increased, the ion concentration in the electrolytic solution 60 inside the second electrolytic solution tank 54 is increased, and the volume of the electrolytic solution 60 supplied from the second electrolytic solution tank 54 is increased. In order to increase the ion concentration in the electrolytic solution 60, the temperature of the electrolytic solution 60 is raised using the heater 66. Alternatively, an electrolyte salt may be added to the second electrolytic solution tank 54 from outside the system. In order to ensure that the water level of the electrolytic solution 60 inside the second electrolytic solution tank can be maintained, the volume of the electrolytic solution 59 supplied from the first electrolytic solution tank 53 is adjusted.

When the ion concentration is to be decreased, the ion concentration in the electrolytic solution 60 inside the second electrolytic solution tank 54 is reduced, and the proportion of heavy water within the high deuterium concentration unit 2 is increased. In order to reduce the ion concentration in the electrolytic solution 60, the temperature of the electrolytic solution 60 is lowered using the heater 66. In order to increase the proportion of heavy water within the high deuterium concentration unit 2, the volume of the electrolytic solution 60 supplied from the second electrolytic solution tank 54 is reduced. Alternatively, the valve 74 may be opened, enabling the electrolytic solution from the third electrolytic solution tank 71 to be supplied to the high deuterium concentration unit 2.

As described above, when the amount of electrolytic solution supplied to the high deuterium concentration unit 2 fluctuates, the supply of the electrolytic solution is adjusted so that the positive electrode 10 and the structure 50 remain positioned beneath the surface of the electrolytic solution.

### (Gas Discharge Step)

In a similar manner to the first embodiment, if the pressure inside the high deuterium concentration unit 2 reaches 1 atmosphere or higher, then the check valve 20 opens, and deuterium gas, oxygen gas and nitrogen gas are discharged from the high deuterium concentration unit 2.

### (Example 2)

Using the nuclide transmutation device of Fig. 7, a nuclide transmutation reaction was performed using the same structure as that used in Example 1. In Example 2, a substance to undergo nuclide transmutation (¹³³Cs) was not added in advance to the structure.

Using a vacuum pump, the low deuterium concentration unit was placed in a vacuum state of 10⁻³ Pa, and this state was maintained.

Heavy water containing 1 mol/l of CsNO₃ was used as the electrolytic solution supplied from the second electrolytic solution tank 54. A voltage difference of 3 V to 5 V was applied between the positive electrode and the negative electrode using the voltage generation device 9, and the heavy water was electrolyzed. The electrolysis was continued for 120 hours (5 days), and was then halted.

The structure was removed from the nuclide transmutation device, and following evaporation of the heavy water from the surface, the amount of Pr produced on the surface of the structure was analyzed by ICP-MS.

### (Comparative Example 2)

A nuclide transmutation test was conducted using the conventional nuclide transmutation device illustrated in Fig. 3. The structure was prepared by using an ion injection method to add ¹³³Cs to the Pd layer on the surface of the same structure as that used in Example 2. The initial surface concentration of ¹³³Cs in the structure was confirmed as being 15 × 10¹⁶ / cm².

Deuterium (D₂) gas was introduced into the high deuterium concentration unit at a pressure of 1.01325 × 10⁵ Pa from a deuterium gas cylinder, and a nuclide transmutation test was conducted in the same manner as Comparative Example 1. Following the test, the amount of Pr produced on the surface of the structure was analyzed by ICP-MS.

The results of the ICP analyses are illustrated in Fig. 9. In the figure, the vertical axis represents the amount of ¹⁴¹Pr produced following the nuclide transmutation. In Fig. 9, the result for Example 2 is shown as the average value of the results from a plurality of tests. The amount of ¹⁴¹Pr produced following the nuclide transmutation was 0.009 µg/cm² (9 ng/cm²) in Comparative Example 2, and 1.1 µg/cm² in Example 2.

Based on the above results, it was evident that according to the nuclide transmutation device and the nuclide transmutation method of the fourth embodiment, by increasing the concentration of ions in the electrolytic solution, the amount added of the substance to undergo nuclide transmutation could be increased, and because the amount of electrolysis of deuterium increased, the amount of the substance produced following the nuclide transmutation could be increased dramatically compared with the conventional method. Further, in the fourth embodiment, because there is no need to add the substance to undergo nuclide transmutation to the structure in advance, the method can be simplified, which is also advantageous.

### {Fifth Embodiment}

Fig. 10 is a schematic illustration of a nuclide transmutation device according to this embodiment. The nuclide transmutation device of this embodiment has a plurality of high deuterium concentration units, and these high deuterium concentration units 90a to 90c are interconnected by electrolytic solution supply channels 91a and 91b. Those structures for which no description is provided are deemed to be the same as those of the nuclide transmutation device of the fourth embodiment. In Fig. 10, a voltage generation device is not shown, but is connected to the device in the same manner as that shown in Fig. 1.

In the fifth embodiment, an electrolytic solution supply device 92 is connected only to the high deuterium concentration unit 90a. In the electrolytic solution supply device 92 of Fig. 10, only the second electrolytic solution tank 54 to which the electrolyte salt is added is shown, but a first electrolytic solution tank (not shown in the figure) which supplies deuterium to the second electrolytic solution tank 54 is also connected in the same manner as that described in the fourth embodiment.

The electrolytic solution inside the high deuterium concentration unit 90a is supplied through the electrolytic solution supply channel 91a to the downstream high deuterium concentration unit 90b. The electrolytic solution inside the high deuterium concentration unit 90b is supplied through the electrolytic solution supply channel 91b to the downstream high deuterium concentration unit 90c.

As described above, the amount of heavy water consumed by the electrolysis reaction in the high deuterium concentration unit 90a is greater than the amount of ions consumed by the nuclide transmutation reaction, and therefore the ion concentration of the electrolytic solution inside the high deuterium concentration unit 90a reaches a state of high concentration. Similarly, the ion concentration of the electrolytic solution inside the high deuterium concentration unit 90b also reaches a state of high concentration. Accordingly, the high deuterium concentration units 90a and 90b act as ion supply sources for the respective downstream high deuterium concentration units 90b and 90c.

In the present embodiment, in order to ensure that the ion concentration of the electrolytic solution in each of the high deuterium concentration units 90a to 90c does not exceed the saturated concentration, the heating temperature of the electrolytic solution is controlled by the heater 66, and the amounts of deuterium added from the third electrolytic solution tanks 71 are regulated.

Furthermore, in a similar manner to the fourth embodiment, the amount of the nuclide transmutation reaction within each of the high deuterium concentration units 90a to 90c can be controlled on the basis of the ion concentration in the electrolytic solution.

### {Reference Signs List}

- 1, 50: Structure (negative electrode)
- 2, 22, 90: High deuterium concentration unit
- 3, 23: Low deuterium concentration unit
- 4, 24: High concentration formation means
- 5, 25: Low concentration formation means
- 6: Pd substrate
- 7: CaO layer
- 8: Pd layer
- 9: Voltage generation device
- 10: Positive electrode
- 11, 92: Electrolytic solution supply device
- 12: Gas discharge channel
- 13: Electrolytic solution tank
- 14, 55, 56, 72, 91: Electrolytic solution supply channel
- 15, 57, 58: Dehumidifier unit
- 16, 59, 60, 75: Electrolytic solution
- 17, 19, 61, 62, 69, 70, 74: Valve
- 18, 67, 68, 76, 77: Gas supply channel
- 20, 33: Check valve
- 21: Substance to undergo nuclide transmutation
- 31: Inert gas supply device
- 32: Exhaust channel
- 41: Cooling unit
- 42, 45: Control unit
- 43, 46: Temperature detection means
- 44, 65: Heating unit
- 51: First electrolytic solution supply device
- 52: Second electrolytic solution supply device
- 53: First electrolytic solution tank
- 54: Second electrolytic solution tank
- 64: Temperature regulator
- 66: Heater
- 71: Third electrolytic solution tank
- 80: Concentration measuring unit

## Claims

1. A nuclide transmutation method comprising:
an electrolytic solution supply step of supplying, via a supply mode that uses a flow of gas to force out a liquid, an electrolytic solution (16) containing heavy water to a high deuterium concentration unit (2) which forms an enclosed space that can be sealed by a structure (1) comprising palladium or a palladium alloy, or a hydrogen-absorbing metal other than palladium or a hydrogen-absorbing alloy other than a palladium alloy,
a high concentration formation step of electrolyzing the supplied electrolytic solution (16) to generate deuterium, and producing a state of high deuterium concentration near the high deuterium concentration unit side surface of the structure (1),
a low concentration formation step of placing a low deuterium concentration unit (3), which forms an enclosed space that can be sealed by the structure (1) and is provided on an opposite side of the structure from the high deuterium concentration unit (2), in a state having a low deuterium concentration relative to that of the high deuterium concentration unit (2), and
a nuclide transmutation step in which, as the deuterium penetrates through the structure (1) from the high deuterium concentration unit (2) toward the low deuterium concentration unit (3), a substance to undergo nuclide transmutation (21) undergoes nuclide transmutation in the structure (1) by reaction with the deuterium,
**characterized in that** the method comprises:
a gas discharge step of discharging gas from the high deuterium concentration unit (2) generated during the high concentration formation step, and
the electrolytic solution is supplied to the high deuterium concentration unit during the high concentration formation step.

2. The nuclide transmutation method according to Claim 1, further comprising an addition step, performed prior to the electrolytic solution supply step, in which the substance to undergo nuclide transmutation (21) is added to the structure (1).

3. The nuclide transmutation method according to Claim 1 or Claim 2, wherein an electrolyte containing the substance to undergo nuclide transmutation is added to the electrolytic solution (16), and
the electrolytic solution (16) containing ions of the substance to undergo nuclide transmutation is supplied to the high deuterium concentration unit (2) in the electrolytic solution supply step, thereby adding ions of the substance to undergo nuclide transmutation to the structure (1).

4. The nuclide transmutation method according to Claim 3, comprising a concentration adjustment step in which a temperature of the electrolytic solution (16) prior to supply to the high deuterium concentration unit (2), and an amount of the electrolytic solution (16) supplied to the high deuterium concentration unit (2) are adjusted, thereby adjusting a concentration of ions of the substance to undergo nuclide transmutation within the electrolytic solution (16) inside the high deuterium concentration unit (2).

5. The nuclide transmutation method according to Claim 1, wherein the low concentration formation step comprises an evacuation step of evacuating another surface side of the structure (1) to a state of vacuum.

6. The nuclide transmutation method according to Claim 1, wherein the low concentration formation step comprises an inert environment formation step of supplying an inert gas to another surface side of the structure (1) to form an inert atmosphere.

7. The nuclide transmutation method according to any one of Claim 1 to Claim 6, further comprising:
a cooling step of cooling a supplied electrolytic solution (16) so that a temperature of the electrolytic solution (16) supplied to one surface side of the structure (1) exhibits a prescribed temperature, and
a heating step of heating another surface side of the structure (1) to a prescribed temperature,
thereby forming a temperature gradient across a thickness direction of the structure (1).

8. A nuclide transmutation device comprising:
a structure (1) comprising palladium or a palladium alloy, or a hydrogen-absorbing metal other than palladium or a hydrogen-absorbing alloy other than a palladium alloy,
a high deuterium concentration unit (2) and a low deuterium concentration unit (3), which are disposed on either side of the structure (1) so as to sandwich the structure (1) therebetween, and form an enclosed space that can be sealed by the structure (1),
a high concentration formation means (4) configured to produce a state of high deuterium concentration near the high deuterium concentration unit (2) side surface of the structure (1), and
a low concentration formation means (5) configured to place the low deuterium concentration unit (3) in a state having a low deuterium concentration relative to that of the high deuterium concentration unit (2),
the high concentration formation means (4) having
a voltage generation unit (9),
a positive electrode (10) disposed opposing the high deuterium concentration unit side surface of the structure (1) with a space provided therebetween,
an electrolytic solution supply unit (11), which comprises a gas source, an electrolytic solution tank, and an electrolytic solution supply channel, the electrolytic solution supply unit being configured to force out and supplie, using a gas from the gas source, an electrolytic solution (16) in the electrolytic solution tank containing heavy water to the high deuterium concentration unit (2) via the electrolytic solution supply channel in a state of high deuterium concentration near the high deuterium concentration unit side surface of the structure (1), and
a gas discharge channel (12) through which gas that has been generated by electrolysis of the electrolytic solution (16) is discharged from the high deuterium concentration unit (2), wherein
the voltage generation unit (9) is configured to apply a voltage difference between the structure (1) and the positive electrode (10) by using the structure (1) as a negative electrode, thereby electrolyzing the electrolytic solution (16) and generating the deuterium, and
the device being configured so that, a substance to undergo nuclide transmutation (21) undergoes nuclide transmutation within the structure (1) by reaction with the deuterium, when the deuterium penetrates through the structure (1) from the high deuterium concentration unit (2) toward the low deuterium concentration unit (3),and
the electrolytic solution supply unit is configured to supply the electrolytic solution to the high deuterium concentration unit during electrolysis.

9. The nuclide transmutation device according to Claim 8, wherein the structure (1), to which the substance to undergo nuclide transmutation (21) has already been added, is disposed between the high deuterium concentration unit (2) and the low deuterium concentration unit (3).

10. The nuclide transmutation device according to Claim 8 or Claim 9, wherein
the electrolytic solution supply unit (11) comprises an electrolyte supply means which adds an electrolyte containing the substance to undergo nuclide transmutation to the electrolytic solution (16),
the electrolyte supply means supplies the electrolytic solution (16) containing ions of the substance to undergo nuclide transmutation to the high deuterium concentration unit (2), and the ions of the substance to undergo nuclide transmutation are added to the structure (1).

11. The nuclide transmutation device according to Claim 10, wherein the electrolytic solution supply unit (11) comprises an electrolytic solution temperature adjustment unit which adjusts a temperature of the electrolytic solution (16), and an electrolytic solution supply volume adjustment unit (51) which adjusts a volume of the electrolytic solution (16) supplied from the electrolytic solution supply unit (51) to the high deuterium concentration unit (2).

12. The nuclide transmutation device according to Claim 8, wherein the low concentration formation means (5) comprises an evacuation device which places the low deuterium concentration unit (3) in a state of vacuum.

13. The nuclide transmutation device according to Claim 8, wherein the low concentration formation means (5) comprises an inert gas supply unit (31) which supplies an inert gas to the low deuterium concentration unit (3).

14. The nuclide transmutation device according to any one of Claim 8 to Claim 13, further comprising:
a cooling unit (41) which cools a supplied electrolytic solution (16) so that a temperature of the electrolytic solution (16) supplied to the high deuterium concentration unit (2) by the electrolytic solution supply unit (11) exhibits a prescribed temperature, and
a heating unit (44) which heats the low deuterium concentration unit side of the structure (1) to a prescribed temperature.

## Patentansprüche

1. Nuklidtransmutationsverfahren, umfassend:
einen Elektrolytlösungszufuhrschritt des Zuführens, über einen Zuführmodus, der sich eines Gasstroms bedient, um eine Flüssigkeit auszutreiben, einer Elektrolytlösung (16), die schweres Wasser enthält, zu einer Deuterium-Hochkonzentrationseinheit (2), die einen abgeschlossenen Raum bildet, der durch eine Struktur (1) verschlossen werden kann, die Palladium oder eine Palladiumlegierung oder ein anderes wasserstoffabsorbierendes Metall als Palladium oder eine andere wasserstoffabsorbierende Legierung als eine Palladiumlegierung umfasst,
einen Hochkonzentrationsherstellungsschritt des Elektrolysierens der zugeführten Elektrolytlösung (16), um Deuterium zu erzeugen, und des Herstellens eines Zustands hoher Deuteriumkonzentration nahe der Deuterium-Hochkonzentrationseinheitsseitenoberfläche der Struktur (1),
einen Niederkonzentrationsherstellungsschritt des Versetzens einer Deuterium-Niederkonzentrationseinheit (3), die einen abgeschlossenen Raum bildet, der durch die Struktur (1) verschlossen werden kann, und auf einer der Deuterium-Hochkonzentrationseinheit (2) entgegengesetzten Seite der Struktur vorgesehen ist, in einen Zustand, der eine niedrige Deuteriumkonzentration verglichen mit jener der Deuterium-Hochkonzentrationseinheit (2) aufweist, und
einen Nuklidtransmutationsschritt, in dem, während das Deuterium von der Deuterium-Hochkonzentrationseinheit (2) in Richtung der Deuterium-Niederkonzentrationseinheit (3) durch die Struktur (1) hindurchdringt, eine Nuklidtransmutation (21) zu unterziehende Substanz Nuklidtransmutation in der Struktur (1) durch Reaktion mit dem Deuterium unterzogen wird,
**dadurch gekennzeichnet, dass** das Verfahren umfasst:
einen Gasabgabeschritt, des Abgebens von Gas aus der Deuterium-Hochkonzentrationseinheit (2), welches während des Hochkonzentrationsherstellungsschritts erzeugt wird, und
die Elektrolytlösung der Deuterium-Hochkonzentrationseinheit während des Hochkonzentrationsherstellungsschritts zugeführt wird.

2. Nuklidtransmutationsverfahren nach Anspruch 1, ferner umfassend einen Zugabeschritt, der vor dem Elektrolytlösungszufuhrschritt durchgeführt wird, in dem die Nuklidtransmutation (21) zu unterziehende Substanz der Struktur (1) zugegeben wird.

3. Nuklidtransmutationsverfahren nach Anspruch 1 oder Anspruch 2, wobei ein Elektrolyt, der die Nuklidtransmutation zu unterziehende Substanz enthält, der Elektrolytlösung (16) zugegeben wird, und
die Elektrolytlösung (16), die Ionen der Nuklidtransmutation zu unterziehenden Substanz enthält, der Deuterium-Hochkonzentrationseinheit (2) in dem Elektrolytlösungszufuhrschritt zugeführt wird, wodurch Ionen der Nuklidtransmutation zu unterziehenden Substanz der Struktur (1) zugegeben werden.

4. Nuklidtransmutationsverfahren nach Anspruch 3, umfassend einen Konzentrationseinstellschritt, in dem eine Temperatur der Elektrolytlösung (16) vor dem Zuführen zu der Deuterium-Hochkonzentrationseinheit (2) und eine Menge der Elektrolytlösung (16), die der Deuterium-Hochkonzentrationseinheit (2) zugeführt wird, eingestellt werden, wodurch eine Konzentration von Ionen der Nuklidtransmutation zu unterziehenden Substanz innerhalb der Elektrolytlösung (16) innerhalb der Deuterium-Hochkonzentrationseinheit (2) eingestellt wird.

5. Nuklidtransmutationsverfahren nach Anspruch 1, wobei der Niederkonzentrationsherstellungsschritt einen Evakuierungsschritt des Evakuierens einer anderen Oberflächenseite der Struktur (1) in einen Vakuumzustand umfasst.

6. Nuklidtransmutationsverfahren nach Anspruch 1, wobei der Niederkonzentrationsherstellungsschritt einen Inertumgebungsherstellungsschritt des Zuführens eines Inertgases zu einer anderen Oberflächenseite der Struktur (1), um eine Inertatmosphäre herzustellen, umfasst.

7. Nuklidtransmutationsverfahren nach einem beliebigen der Ansprüche 1 bis 6, ferner umfassend:
einen Kühlschritt des Kühlens einer zugeführten Elektrolytlösung (16), derart, dass eine Temperatur der Elektrolytlösung (16), die zu einer Oberflächenseite der Struktur (1) zugeführt wird, eine vorgegebene Temperatur aufweist, und
einen Erhitzschritt des Erhitzens einer anderen Oberflächenseite der Struktur (1) auf eine vorgegebene Temperatur,
wodurch ein Temperaturgefälle über eine Dickenrichtung der Struktur (1) gebildet wird.

8. Nuklidtransmutationsvorrichtung, umfassend:
eine Struktur (1), die Palladium oder eine Palladiumlegierung oder ein anderes wasserstoffabsorbierendes Metall als Palladium oder eine andere wasserstoffabsorbierende Legierung als eine Palladiumlegierung umfasst,
eine Deuterium-Hochkonzentrationseinheit (2) und eine Deuterium-Niederkonzentrationseinheit (3), die auf jeweils einer Seite der Struktur (1) angeordnet sind, um die Struktur (1) dazwischen sandwichartig zu umgeben, und einen abgeschlossenen Raum bilden, der durch die Struktur (1) verschlossen werden kann,
ein Hochkonzentrationsherstellungsmittel (4), das dazu ausgebildet ist, einen Zustand hoher Deuteriumkonzentration nahe der Deuterium-Hochkonzentrationseinheits(2)-Seitenoberfläche der Struktur (1) herzustellen, und
ein Niederkonzentrationsherstellungsmittel (5), das dazu ausgebildet ist, die Deuterium-Niederkonzentrationseinheit (3) in einem Zustand zu versetzen, in dem sie eine niedrige Deuteriumkonzentration verglichen mit jener der Deuterium-Hochkonzentrationseinheit (2) aufweist,
das Hochkonzentrationsherstellungsmittel (4), aufweisend
eine Spannungserzeugungseinheit (9),
eine positive Elektrode (10), die der Deuterium-Hochkonzentrationseinheits-Seitenoberfläche der Struktur (1) gegenüberliegend angeordnet ist, wobei dazwischen ein Zwischenraum vorgesehen ist,
eine Elektrolytlösungszuführeinheit (11), die eine Gasquelle, einen Elektrolytlösungsbehälter und einen Elektrolytlösungszufuhrkanal umfasst, wobei die Elektrolytlösungszuführeinheit dazu ausgebildet ist, eine Elektrolytlösung (16) in dem Elektrolytlösungsbehälter, die schweres Wasser enthält, mittels eines Gases von der Gasquelle auszutreiben und der Deuterium-Hochkonzentrationseinheit (2) über den Elektrolytlösungszufuhrkanal in einem Zustand hoher Deuteriumkonzentration nahe der Deuterium-Hochkonzentrationseinheits-Seitenoberfläche der Struktur (1) zuzuführen, und
einen Gasabgabekanal (12), durch den Gas, das durch Elektrolyse der Elektrolytlösung (16) erzeugt wurde, aus der Deuterium-Hochkonzentrationseinheit (2) abgegeben wird, wobei
die Spannungserzeugungseinheit (9) dazu ausgebildet ist, eine Spannungsdifferenz zwischen der Struktur (1) und der positiven Elektrode (10) durch Verwendung der Struktur (1) als negative Elektrode anzulegen, wodurch die Elektrolytlösung (16) elektrolysiert wird und das Deuterium erzeugt wird, und
wobei die Vorrichtung derart ausgebildet ist, dass eine Nuklidtransmutation (21) zu unterziehende Substanz innerhalb der Struktur (1) Nuklidtransmutation durch Reaktion mit dem Deuterium unterzogen wird, wenn das Deuterium von der Deuterium-Hochkonzentrationseinheit (2) in Richtung der Deuterium-Niederkonzentrationseinheit (3) durch die Struktur (1) hindurchdringt, und
die Elektrolytlösungszuführeinheit dazu ausgebildet ist, die Elektrolytlösung während der Elektrolyse der Deuterium-Hochkonzentrationseinheit zuzuführen.

9. Nuklidtransmutationsvorrichtung nach Anspruch 8, wobei die Struktur (1), der die Nuklidtransmutation (21) zu unterziehende Substanz bereits zugegeben wurde, zwischen der Deuterium-Hochkonzentrationseinheit (2) und der Deuterium-Niederkonzentrationseinheit (3) angeordnet ist.

10. Nuklidtransmutationsvorrichtung nach Anspruch 8 oder Anspruch 9, wobei
die Elektrolytlösungszuführeinheit (11) ein Elektrolytzufuhrmittel umfasst, das einen Elektrolyt, der die Nuklidtransmutation zu unterziehende Substanz enthält, zu der Elektrolytlösung (16) zugibt,
das Elektrolytzufuhrmittel die Elektrolytlösung (16), die Ionen der Nuklidtransmutation zu unterziehenden Substanz enthält, der Deuterium-Hochkonzentrationseinheit (2) zuführt und die Ionen der Nuklidtransmutation zu unterziehenden Substanz zu der Struktur (1) zugegeben werden.

11. Nuklidtransmutationsvorrichtung nach Anspruch 10, wobei die Elektrolytlösungszuführeinheit (11) eine Elektrolytlösungstemperatureinstelleinheit umfasst, die eine Temperatur der Elektrolytlösung (16) einstellt, und eine Elektrolytlösungszufuhrmengeneinstelleinheit (51) umfasst, die eine Menge der Elektrolytlösung (16) einstellt, die von der Elektrolytlösungszuführeinheit (51) zu der Deuterium-Hochkonzentrationseinheit (2) zugeführt wird.

12. Nuklidtransmutationsvorrichtung nach Anspruch 8, wobei das Niederkonzentrationsherstellungsmittel (5) eine Evakuiervorrichtung umfasst, welche die Deuterium-Niederkonzentrationseinheit (3) in einen Vakuumzustand versetzt.

13. Nuklidtransmutationsvorrichtung nach Anspruch 8, wobei das Niederkonzentrationsherstellungsmittel (5) eine Inertgaszuführeinheit (31) umfasst, die der Deuterium-Niederkonzentrationseinheit (3) ein Inertgas zuführt.

14. Nuklidtransmutationsvorrichtung nach einem beliebigen der Ansprüche 8 bis 13, ferner umfassend:
eine Kühleinheit (41), die eine zugeführte Elektrolytlösung (16) derart kühlt, dass eine Temperatur der Elektrolytlösung (16), die der Deuterium-Hochkonzentrationseinheit (2) durch die Elektrolytlösungszuführeinheit (11) zugeführt wird, eine vorgegebene Temperatur ist, und
eine Erhitzeinheit (44), welche die Deuterium-Niederkonzentrationseinheitsseite der Struktur (1) auf eine vorgegebene Temperatur erhitzt.

## Revendications

1. Procédé de transmutation de nucléide comportant :
une étape d'alimentation en solution électrolytique dans laquelle on délivre, par l'intermédiaire d'un mode d'alimentation qui utilise un écoulement du gaz pour expulser un liquide, une solution électrolytique (16) contenant de l'eau lourde à une unité à forte concentration en deutérium (2) qui forme un espace fermé qui peut être rendu étanche par une structure (1) comportant du palladium ou un alliage de palladium, ou un métal absorbant l'hydrogène autre que le palladium ou un alliage absorbant l'hydrogène autre qu'un alliage de palladium,
une étape de formation de forte concentration dans laquelle on électrolyse la solution électrolytique délivrée (16) pour générer du deutérium, et à produire un état de forte concentration en deutérium près de la surface du côté de l'unité à forte concentration en deutérium de la structure (1),
une étape de formation de faible concentration dans laquelle on met une unité à faible concentration en deutérium (3), qui forme un espace fermé qui peut être rendu étanche par la structure (1) et est prévue sur un côté opposé de la structure par rapport à celle de l'unité à forte concentration en deutérium (2), dans un état ayant une faible concentration en deutérium par rapport à l'unité à forte concentration en deutérium (2), et
une étape de transmutation de nucléide dans laquelle, lorsque le deutérium pénètre à travers la structure (1) depuis l'unité à forte concentration en deutérium (2) vers l'unité à faible concentration en deutérium (3), une substance destinée à subir une transmutation de nucléide (21) subit une transmutation de nucléide dans la structure (1) par réaction avec le deutérium,
**caractérisé en ce que** le procédé comporte :
une étape de refoulement de gaz destinée à refouler du gaz de l'unité à forte concentration en deutérium (2) généré pendant l'étape de formation de forte concentration, et
la solution électrolytique est délivrée à l'unité à forte concentration en deutérium pendant l'étape de formation de forte concentration.

2. Procédé de transmutation de nucléide selon la revendication 1, comportant en outre une étape d'addition, réalisée avant l'étape d'alimentation en solution électrolytique, dans laquelle la substance destinée à subir une transmutation de nucléide (21) est ajoutée à la structure (1).

3. Procédé de transmutation de nucléide selon la revendication 1 ou la revendication 2, dans lequel un électrolyte contenant la substance destinée à subir une transmutation de nucléide est ajoutée à la solution électrolytique (16), et
la solution électrolytique (16) contenant des ions de la substance destinée à subir une transmutation de nucléide est délivrée à l'unité à forte concentration en deutérium (2) dans l'étape d'alimentation en solution électrolytique, ajoutant ainsi des ions de la substance destinée à subir une transmutation de nucléide à la structure (1).

4. Procédé de transmutation de nucléide selon la revendication 3, comportant une étape d'ajustement de concentration dans laquelle une température de la solution électrolytique (16) avant d'être délivrée à l'unité à forte concentration en deutérium (2), et une quantité de la solution électrolytique (16) délivrée à l'unité à forte concentration en deutérium (2) sont ajustées, ajustant ainsi une concentration en ions de la substance destinée à subir une transmutation de nucléide dans la solution électrolytique (16) à l'intérieur de l'unité à forte concentration en deutérium (2).

5. Procédé de transmutation de nucléide selon la revendication 1, dans lequel l'étape de formation de faible concentration comporte une étape d'évacuation dans laquelle on évacue la surface d'un autre côté de la structure (1) jusqu'à un état de vide.

6. Procédé de transmutation de nucléide selon la revendication 1, dans lequel l'étape de formation de faible concentration comporte une étape de formation d'environnement inerte dans laquelle on délivre un gaz inerte à une surface de l'autre côté de la structure (1) pour former une atmosphère inerte.

7. Procédé de transmutation de nucléide selon l'une quelconque des revendications 1 à 6, comportant en outre :
une étape de refroidissement dans laquelle on refroidi une solution électrolytique délivrée (16) de telle sorte qu'une température de la solution électrolytique (16) délivrée à la surface d'un côté de la structure (1) présente une température prescrite, et
une étape de chauffage dans lequel on chauffe la surface de l'autre côté de la structure (1) à une température prescrite,
formant ainsi un gradient de température à travers une direction d'épaisseur de la structure (1).

8. Dispositif de transmutation de nucléide comportant :
une structure (1) comportant du palladium ou un alliage de palladium, ou un métal absorbant l'hydrogène autre que le palladium ou un alliage absorbant l'hydrogène autre qu'un alliage de palladium,
une unité à forte concentration en deutérium (2) et une unité à faible concentration en deutérium (3), qui sont disposées de chaque côté de la structure (1) de façon à enserrer la structure (1), et forment un espace fermé qui peut être rendu étanche par la structure (1),
des moyens de formation de forte concentration (4) configurés pour produire un état de forte concentration en deutérium près de la surface du côté de l'unité à forte concentration en deutérium (2) de la structure (1), et
des moyens de formation de faible concentration (5) configurés pour mettre l'unité à faible concentration en deutérium (3) dans un état ayant une faible concentration en deutérium par rapport à celle de l'unité à forte concentration en deutérium (2),
les moyens de formation de forte concentration (4) ayant
une unité de génération de tension (9),
une électrode positive (10) disposée à l'opposé de la surface latérale d'unité à forte concentration en deutérium de la structure (1) avec un espace prévu entre elles,
une unité d'alimentation en solution électrolytique (11), qui comporte une source de gaz, un réservoir de solution électrolytique, et un canal d'alimentation en solution électrolytique, l'unité d'alimentation en solution électrolytique étant configurée pour forcer et délivrer, en utilisant un gaz de la source de gaz, une solution électrolytique (16) dans le réservoir de solution électrolytique contenant de l'eau lourde à l'unité à forte concentration en deutérium (2) par l'intermédiaire du canal d'alimentation en solution électrolytique dans un état de forte concentration en deutérium près de la surface du côté de l'unité à forte concentration en deutérium de la structure (1), et
un canal de refoulement de gaz (12) à travers lequel du gaz qui a été généré par électrolyse de la solution électrolytique (16) est refoulé de l'unité à forte concentration en deutérium (2), dans lequel
l'unité de génération de tension (9) est configurée pour appliquer une différence de tension entre la structure (1) et l'électrode positive (10) en utilisant la structure (1) comme électrode négative, en électrolysant ainsi la solution électrolytique (16) et en générant le deutérium, et
le dispositif étant configuré de telle sorte qu'une substance destinée à subir une transmutation de nucléide (21) subit une transmutation de nucléide dans la structure (1) grâce à une réaction avec le deutérium, quand le deutérium pénètre à travers la structure (1) depuis l'unité à forte concentration en deutérium (2) vers l'unité à faible concentration en deutérium (3), et
l'unité d'alimentation en solution électrolytique est configurée pour délivrer la solution électrolytique à l'unité à forte concentration en deutérium pendant l'électrolyse.

9. Dispositif de transmutation de nucléide selon la revendication 8, dans lequel la structure (1), à laquelle la substance destinée à subir une transmutation de nucléide (21) a déjà été ajoutée, est disposée entre l'unité à forte concentration en deutérium (2) et l'unité à faible concentration en deutérium (3).

10. Dispositif de transmutation de nucléide selon la revendication 8 ou la revendication 9, dans lequel
l'unité d'alimentation en solution électrolytique (11) comporte des moyens d'alimentation en électrolyte qui ajoute un électrolyte contenant la substance destinée à subir une transmutation de nucléide à la solution électrolytique (16),
les moyens d'alimentation en électrolyte délivrent la solution électrolytique (16) contenant des ions de la substance destinée à subir une transmutation de nucléide à l'unité à forte concentration en deutérium (2), et les ions de la substance destinée à subir une transmutation de nucléide sont ajoutés à la structure (1).

11. Dispositif de transmutation de nucléide selon la revendication 10, dans lequel l'unité d'alimentation en solution électrolytique (11) comporte une unité d'ajustement de température de solution électrolytique qui ajuste une température de la solution électrolytique (16), et une unité d'ajustement de volume d'alimentation en solution électrolytique (51) qui ajuste un volume de la solution électrolytique (16) délivrée depuis l'unité d'alimentation en solution électrolytique (51) jusqu'à l'unité à forte concentration en deutérium (2).

12. Dispositif de transmutation de nucléide selon la revendication 8, dans lequel les moyens de formation de faible concentration (5) comportent un dispositif d'évacuation qui met l'unité à faible concentration en deutérium (3) dans un état de vide.

13. Dispositif de transmutation de nucléide selon la revendication 8, dans lequel les moyens de formation de faible concentration (5) comportent une unité d'alimentation en gaz inerte (31) qui délivre un gaz inerte à l'unité à faible concentration en deutérium (3).

14. Dispositif de transmutation de nucléide selon l'une quelconque des revendications 8 à 13, comportant en outre :
un dispositif de refroidissement (41) qui refroidit une solution électrolytique délivrée (16) de telle sorte qu'une température de la solution électrolytique (16) délivrée à l'unité à forte concentration en deutérium (2) par l'unité d'alimentation en solution électrolytique (11) présente une température prescrite, et
un dispositif de chauffage (44) qui chauffe le côté de l'unité à faible concentration en deutérium de la structure (1) à une température prescrite.
